# EUROPEAN PATENT APPLICATION

(11) **EP 4 656 054 A1**
(43) Date of publication of application: **03.12.2025**
(21) Application number: 24179432.0
(22) Date of filing: 31.05.2024
(51) Int. Cl.: A23C 19/032, A23C 19/068, A23C 19/072

(54) **CHEESE RIPENING PROCESS**

(71) Applicant: DSM IP Assets B.V., 6221 BE Maastricht (NL)
(72) Inventor: The designation of the inventor has not yet been filed
(74) Representative: dsm-firmenich IP

(57) **Abstract**

The present invention relates to a novel process for volatile flavor development during cheese ripening. The novel process includes the use of specific starter cultures, preferably a mix of starter cultures, in the manufacturing of a cheese product, particularly in the manufacturing of hard or semi-hard cheese. Using said process, the cheese ripening phase can be shortened, particularly the time to develop the cheese-specific volatile flavors.

## Description

The present invention relates to a novel process for volatile flavor development during cheese ripening. The novel process includes the use of specific starter cultures, preferably a mix of starter cultures, in the manufacturing of a cheese product, particularly in the manufacturing of hard or semi-hard cheese. Using said process, the cheese ripening phase can be shortened, particularly the time to develop the cheese-specific volatile flavors.

Lactic acid bacteria (LAB) are known for their role in the preparation of fermented foods, such as for instance cheese, yoghurt, meat, and vegetable-based products.

Flavor development in hard and semi-hard type cheeses such as Cheddar and Gouda is achieved during cheese production but mainly during ripening which is a time-consuming process and can last several weeks to months. Several ways to stimulate the flavor development have been proposed, such as elevated cheese ripening temperatures, the use of cheese ripening enzymes or via application of specific adjunct cultures (Fox et al., Antonie van Leeuwenhoel< 70: 271-297, 1996). However, none of said methods are yet satisfactory, either because of too long cheese ripening times and/or different flavor profiles that do not match with typical cheese flavors known for such cheese, such as Gouda or Cheddar.

Flavor development during cheese production and cheese ripening can be separated into 2 main subprocesses, i.e. (a) generation of water-soluble nonvolatile flavor compounds, such as amino acids, and organic acids that support the taste of cheese and (b) the production of volatile flavor compounds such as aldehydes and alcohols that contribute to the aromatic profile of cheese. These two subprocesses take place at the same time but are stimulated in different ways. For instance, cells originating from the starter culture can secrete enzymes or sometimes release enzymes by cell lysis that contribute to degradation of casein present in the milk leading to water-soluble (oligo)peptides and amino acids that contribute to a sweet or savory taste.

Cells of typical starter cultures can convert or catabolize amino acids into volatile flavor compounds such as aldehydes, acids, esters, sulfur compounds and alcohols, a process that is mediated by intracellular enzymes, particularly transaminases and decarboxylases.

Transamination of amino acids is assumed to be limited by the availability of α-I<etoacids, such as e.g., α-ketoglutarate, which is assumed to be the preferred ammonia acceptor for transaminases (Yvon et al., Int. Dairy J. 8, 889-898, 1998).

Especially, the decarboxylation of such α-ketoacids originating from branched chain amino acids results in the formation of several typical cheese key flavors such as 3-methylbutanal and 2-methylbutanal (see, e.g. Jo et al, J.Dairy Sci. 101:1967-1989, 2018).

One often proposed way to (re)generate α-ketoglutarate in LAB strains is through introduction of glutamate dehydrogenase (GDH) activity in such cells, catalyzing the deamination of glutamate into α-ketoglutarate. Whereas it could be shown that GDH activity can enhance the catabolism of amino acids such as e.g., leucine or phenylalanine and can increase the production of carboxylic acids, no positive effect of GDH activity on the production of key-flavors such as 3-methylbutanal was found (see e.g., Tanous et al., 2006, Applied and Environmental Microbiology, 72(2),1402-1409).

An alternative way for *Lactococcus* strains to generate α-ketoglutarate is via uptake of citrate which can be converted via iso-citrate or oxaloacetate into α-ketoglutarate (Pudlil< and Lolkema, Appl Environ Microbiol, Vol. 78, No. 18, 6665-6673, 2012). For some types of cheese this is disadvantageous due to formation of CO₂, which can lead to cracks and slits formation in cheese during ripening. Cheese types that have a relatively firm texture such as Cheddar are especially sensitive to CO₂ production.

Thus, there is still a need for an improved cheese ripening process including development of the typical cheese flavor during said ripening phase, allowing the cheese manufactures to control the pH and the desired flavor profile particularly during early cheese ripening phase and to minimize costs, time and resources associated with such process.

Surprisingly, we now could demonstrate that the presence of GDH activity and subsequently the recycling of α-ketoglutarate via glutamate as proposed in the art is not required for flavor development during cheese ripening, resulting in less costs and required resources. Instead, we found that flavor development can be stimulated in the presence of residual sugars, particularly in the presence of galactose present in the early cheese ripening phase, leading to shorter ripening time including shorter time for the typical cheese flavor to develop.

Thus, the present invention relates to a novel mix of starter cultures wherein at least one of the starter culture strains is a galactose-excreting or galactose-releasing Lactococcus strain and manufacturing or production of cheese, particularly hard or semi-hard cheese, including but not limited to Gouda or Cheddar, using said starter cultures, particularly comprising the step of fermenting milk with said mix of starter cultures, more particularly wherein said mix of starter cultures is added to a milk product and wherein the starter culture comprises one or more galactose-excreting Lactococcus strains thereby complementing and furthering each other's flavor contribution.

Particularly, the addition or presence of said starter cultures or mix of starter cultures according to the present invention does not compromise the flavor profile, texture, appearance or desired pH of the cheese as compared to the use of commercially available starter cultures.

Thus, the present invention is directed to production of cheese comprising a cheese ripening phase, said phase comprising production or development of volatile (cheese) flavors during cheese ripening, comprising increasing the level of residual sugars, particularly galactose, during cheese ripening, especially during the early phase of cheese ripening as compared to a known process.

Furthermore, the present invention is related to the manufacturing of cheese including a cheese ripening phase, particularly ripening of hard or semi-hard cheese, including but not limited to Gouda and Cheddar, wherein the time for development of the typical cheese flavor profile is reduced by at least about 1 to 2 weeks as compared to a known process.

Furthermore, the present invention relates to manufacturing of cheese, particularly hard or semi-hard cheese, including but not limited to Gouda or Cheddar, comprising release of galactose into the milk or cheese curd during the early stages of cheese ripening. Particularly, wherein said residual galactose is converted into the typical volatile cheese flavor compounds.

Furthermore, the present invention relates to the use of starter cultures in the production of cheese, particularly hard or semi-hard cheese, including but not limited to Gouda or Cheddar, comprising the use Lactococcus strains releasing galactose into the milk or cheese curd, particularly wherein such release is occurring at the onset or early stages of cheese ripening.

In one embodiment, the present invention relates to a process for manufacturing of cheese, including a cheese ripening process as described herein, comprising one or more washing steps, wherein the amount of washing water can be reduced by at least about 10%, such as e.g. at least about 15, 20, 25, 30, 35, 40, 45, 50, 55, 60, 65, 70, 75, 80, 85, 90, 95 or even 100% as compared to a known cheese ripening process, preferably in a process for the manufacturing of Gouda.

Particularly, the present invention is directed to a cheese ripening process and to a novel starter culture to be used in such a process, preferably ripening of hard or semi-hard cheese including but not limited to Gouda or Cheddar, wherein the galactose content present in the milk or cheese curd, particularly galactose released into the milk or cheese curd in the early ripening phase is in the range of 0.1 to 1%, preferably in the range of 0.2 to 0.6% when using exclusively mesophilic starter cultures.

Particularly, the present invention is directed to manufacturing cheese, comprising a cheese ripening process that is reduced by at least about 1 to 2 weeks and to a novel starter culture to be used in such a process, preferably ripening of hard or semi-hard cheese including but not limited to Gouda or Cheddar, as defined herein, wherein the use of such process including the starter cultures as defined herein are not compromising on the texture, appearance, flavor profile or pH of the cheese and as compared to a process using a commercially available starter culture.

Particularly, the present invention is related to a method to accelarate or reduce the time for development of volatile flavor compounds, said process comprising incubating milk or a plant-based alternative as defined herein with one or more strains of Lactococcus, particularly with a mix of 2 or 3 different types of Lactococcus strains, more particularly strains of Lactococcus cremoris and/or Lactococcus lactis, wherein at least one of said strains is capable of excreting galactose when added to said milk product. More particularly, the time for development of the typical cheese flavors is reduced by at least about 1 to 2 weeks.

Throughout the present specification and the accompanying claims, the words "comprise" and "include" and variations such as "comprises", "comprising", "includes" and "including" are to be interpreted inclusively. That is, these words are intended to convey the possible inclusion of other elements or integers not specifically recited, where the context allows.

The articles "a" and "an" are used herein to refer to one or more than one (i.e. to one or at least one) of the grammatical object of the article. By way of example, "an element" may mean one element or more than one element. When referring to a noun (e.g., a compound, an additive, etc.) in the singular, the plural is meant to be included. Thus, when referring to a specific moiety, e.g., a "strain", this means "at least one" of that strain, e.g., "at least one strain", unless specified otherwise.

When referring to a compound of which several isomers exist (e.g., a D and an L enantiomer), the compound in principle includes all enantiomers, diastereomers and cis/trans isomers of that compound that may be used in the particular aspect of the invention; in particular when referring to such as compound, it includes the natural isomer(s).

As used herein, the term "lactic acid bacteria" (LAB) or "lactic bacteria" refers to food-grade bacteria producing lactic acid as the major metabolic end-product of carbohydrate fermentation. These bacteria are related by their common metabolic and physiological characteristics and are usually Gram positive, low-GC, acid tolerant, non-sporulating, non-respiring, rod-shaped bacilli, or cocci. During the fermentation stage, the consumption of sugars by these bacteria causes the formation of lactic acid and reduces the pH. These bacteria are thus responsible for the acidification and in some cases (e.g., in case of milk fermentations) for the texture of the fermented product. As used herein, the term "LAB" or "lactic bacteria" encompasses, but is not limited to, bacteria belonging to the genus of Lactobacillus spp., Bifidobacterium spp., Streptococcus spp., Lactococcus spp., such as Lactobacillus delbruel<ii subsp. bulgaricus, Streptococcus thermophilus, Bifidobacterium animalis, Lactococcus lactis, Lactococcus cremoris, Lactobacillus casei, Lactobacillus plantarum, Lactobacillus paracasei, Lactobacillus rhamnosus, Lactobacillus helveticus, Lactobacillus acidophilus and Bifidobacterium breve.

As used herein, the term "Lactococcus lactis" is interchangeably referred to Lactococcus lactis subsp. lactis. The term "Lactococcus cremoris" is interchangeably referred to Lactococcus lactis subsp. cremoris.

The term "milk" or "milk product" as interchangeably used herein is intended to encompass milks from mammals, from plant sources or recombinant produced mill<. Preferably, the milk is from a mammal source. Mammal sources of milk include, but are not limited to cow, sheep, goat, buffalo, camel, Ilama, mare and deer. In a preferred embodiment, the milk is from a mammal selected from the group consisting of cow, sheep, goat, buffalo, camel, Ilama, mare and deer, and combinations thereof. Plant sources of milk include, but are not limited to, milk extracted from soybean, pea, peanut, barley, rice, oat, quinoa, almond, cashew, coconut, hazelnut, hemp, sesame seed, sunflower seed, and/or mixtures thereof. In addition, the term "milk" refers to not only whole mill<, but also skim milk or any liquid component derived thereof.

As used in the present specification, the term "fermented mill< product" refers to a product that has been fermented with LAB strains known in the art and particularly with the Lactococcus strains according to the present invention or any microorganism derived therefrom. The fermentation process increases the shelf-life of the product, adds flavors and texture, while enhancing and improving the digestibility of mill<. One example of such a fermented milk product is cheese.

As used herein, the term "cheese" refers to hard and semi-hard cheese, particularly it includes Gouda, Edam, Maasdammer, Gruyere, Comte, Colby, Emmentaler, Parmesan or Cheddar cheeses.

The term "starter culture" (also referred to as "starter") as used herein refers to a composition comprising one or more LAB strains, particularly strains of Lactococcus, which are responsible for the acidification of the milk or milk base according to the definition given herein. Starter culture compositions may be fresh (liquid), frozen or freeze-dried. Freeze dried cultures need to be regenerated before use. For the production of a fermented milk product, the starter cultures composition is usually added as fresh or liquid in an amount from 0.1 to 3%, preferably from 0.3 to 2%, such as e.g., in an amount of 0.4, 0.5, 0.6, 0.7, 0.8, 0.9, 1.0, 1.5, 2.0, 2.5% by weight of the total amount of milk or milk base. For the production of a fermented milk product, the starter composition might be added as frozen DVC starter cultures in an amount of 0.01 to 0.5 g/l, preferably in an amount of 0.05 to 0.2 g/l, such as e.g. in an amount of about 0.06, 0.08, 0.1, 0.12, 0.14, 0.16, 0.18 g/l of the total amount of milk or milk base.

The term "thermophile" or "thermophilic" as used herein refers to LAB strains that thrive well at temperatures above about 38°C. The most useful thermophilic lactic acid bacteria include Lactobacillus spp. and Streptococcus ssp. Hence, a "thermophilic fermentation" herein refers to a fermentation that is being executed at a temperature above about 35°C, for example between about 35°C and about 45°C, such as e.g., at about 42°C.

The term "mesophile" or "mesophilic" as used herein refers to LAB strains that thrive best at temperatures lower than about 41°C, such as e.g., between about 15°C and about 40°C. Examples of mesophilic lactic acid bacteria with industrial relevance include for instance Lactococcus ssp., Leuconostoc ssp and Lactobacillus ssp. Hence, a "mesophilic fermentation" herein refers to a fermentation that is being done at a temperature between about 20°C and 41°C, such as e.g., at about 25, 27, 28, 29, 30, 31, 32, 34, 35°C. Preferably, strains to be used for the performance of the present invention are mesophilic.

The term "fermentation" as used herein refers to a metabolic process wherein sugar(s) are being converted into organic acids, gases, or alcohol. Fermentation occurs in many different cell types, such as e.g., yeasts and bacteria. Preferably, fermentation comprises the conversion of lactose into lactic acid.

Particularly, the present invention is related to the manufacture of cheese comprising a ripening process, especially ripening of semi-hard cheese e.g. Gouda-type cheese or hard cheese e.g. Cheddar-type cheese including the use of starter cultures that are specific for such kind of cheese and as defined herein. As used herein, a "Gouda cheese starter culture" is suitable for production of Gouda or Cheddar cheese.

Suitable Gouda cheese starter cultures can be undefined or defined starter culture complexes such as e.g. strains of Lactococcus cremoris, Lactococcus lactis, Lactococcus lactis biovar. diacetylactis and/or Leuconostoc strains. The composition can be dominated by L. lactis and L. cremoris strains that generally are primarily responsible for a fast and stable acidification. Suitable strains known as aroma formers might be selected from e.g. L. lactis biovar. diacetylactis and Leuconostoc, leading to buttery flavour notes and typical holes due to CO₂ formation.

Those starter cultures, particularly defined Gouda cheese starter cultures, might be used with other microbial compositions.

The cheese ripening process according to the present invention includes cheese ripening under normal atmosphere in gas permeable coatings but also cheese ripening in non-gas permeable vacuum sealed bags, particularly using starter cultures without the gas producing Leuconostoc and/or L. lactis biovar. diacetylactis strains, with ripening temperatures in the range of 5 to 25°C, preferably in the range of 5 to 15°C
The present invention furthermore provides novel Lactococcus strains to be used for ripening of cheese selected from hard and semi-hard cheese, including but not limited to Gouda or Cheddar, as well as a method for obtaining said strains, more preferably strains of Lactococcus, most preferably strains of L. cremoris and/or L. lactis, said strains being capable of releasing galactose into the milk or cheese curd, particularly during the early cheese ripening phase without compromising the flavor profile, texture, appearance or pH range of the cheese.

Particularly, the present invention is related to a mixture of starter cultures, such as Gouda cheese starter cultures, comprising at least strains of Lactococcus, most preferably strains of L. cremoris and/or L. lactis, capable of excreting galactose when added to the milk to start the cheese ripening process.

In one embodiment, said Lactococcus strain capable of excreting galactose is a lactose-metabolizing Lactococcus strain.

As used herein, the term "galactose-excreting" strain as defined herein relates to Lactococcus strains that provide a certain amount of residual galactose, i.e. galactose released or excreted into the milk or the cheese curd. It includes Lactococcus strains that can metabolize glucose or lactose, preferably strains selected or derived from Lactococcus cremoris or Lactococcus lactis. The term furthermore includes Lactococcus strains with an active galactose metabolism that excrete or leak galactose into the medium (i.e. the milk or the cheese curd) or strains that are derivatives of non-galactose excreting strains according to the definition provided herein but have been genetically modified or that include natural mutations that disrupt the galactose-metabolizing pathway to become a galactose-excreting strain. Particularly, the inventive starter culture or mix of starter cultures is a Gouda-type starter culture which is capable of producing volatile flavor compounds during cheese ripening, particularly during the start or at the early phase of cheese ripening, wherein at least one of the starter strains is a galactose-excreting Lactococcus strain.

Particularly, the starter culture mix as well as the cheese manufacturing process according to the present invention including the galactose-excreting Lactococcus strain furthermore comprises lactose-metabolizing, non-galactose-excreting Lactococcus strains, optionally furthermore combined with non-lactose-metabolizing Lactococcus strains, particularly combined with non-lactose, galactose-metabolizing Lactococcus strains.

Particularly, the starter culture mix according to the present invention comprises galactose-excreting and non-galactose-excreting LAB strains, such as strains of Lactococcus, more particularly strains of Lactococcus cremoris and/or Lactococcus lactis.

In one embodiment, the starter culture mix as defined herein comprises a non-galactose-excreting LAB strain, particularly Lactococcus, that metabolizes lactose, particularly a fast-growing strain, more particularly a Lactococcus strain. Particularly, said lactose-metabolizing strain is used for fast acidification of the cheese mill<.

A "fast-growing strain" or a strain that is used for "fast acidification" as used herein refers to a lactose-metabolizing strain preferably strain of Lactococcus capable of acidifying cheese to a pH between 5.3 and 6.0, preferably pH between 5.5 and 5.7, in 4 to 6 hours from inoculation of the milk with such strain. Said strain meets the regular/standard milk acidification profile of the cheese for which it is used, including Gouda or Cheddar cheese.

In a further embodiment, the starter culture mix as defined herein comprises a galactose-metabolizing strain, particularly a flavor-producing Lactococcus strain capable of producing volatile Gouda or Cheddar cheese flavors. Preferably, said galactose-metabolizing strain remains metabolically active during the cheese ripening phase, such as e.g. is capable of converting galactose into pyruvate and convert amino acids into volatile compounds that contribute to the typical cheese flavor profile.

Particularly, the starter culture mix as defined herein is used in a cheese ripening process comprising control of galactose content in cheese.

Particularly, the starter culture mix as defined herein is used in a cheese ripening process wherein the pH of the cheese is maintained at the level that is typical for this type of cheese, i.e. wherein the increase during cheese ripening maintains in the typical range. For example, a typical pH for Cheddar is in the range of 5.0 to 5.2. The typical pH for Gouda is in the range of 5.2 to 5.4.

Particularly, the starter culture or mix of starter cultures according to the present invention metabolizes the (additional) residual galactose that is predominately produced during milk acidification by said galactose-excreting strain, particularly strain of Lactococcus cremoris or Lactococcus lactis, during the early cheese ripening phase.

In one preferred embodiment, the cheese ripening process as described herein comprises the use of a mix of starter cultures, particularly a mix of at least 2 or 3 strains with different sugar metabolizing properties, including, but not limited to strains of Lactococcus lactis and/or Lactococcus cremoris, wherein one of the strains is selected from Lactococcus capable of excreting galactose and thus releasing galactose into the milk or cheese curd.

Preferably, the use of said starter culture mix as defined herein in a process for cheese manufacturing, including a process for ripening of cheese, particularly ripening of hard or semi-hard cheese, including but not limited to Gouda or Cheddar, results in formation of volatile flavors typical for said kind of cheese, wherein the time for developing the typical cheese flavors is reduced with about 1 to 2 weeks as compared to development of the typical flavors during cheese ripening using commercially available cheese starter cultures.

In one embodiment, the starter strain(s) or starter culture mix as defined herein comprises galactose transporter activity. Genes expressing such galactose transporters are known in the art (see, e.g. Neves et al., Appl. Environ. Microbiol., Vol. 76, No. 21, 7048-7060, 2010).

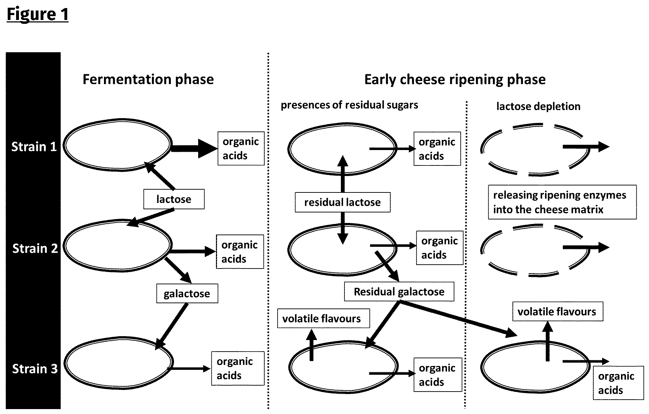

A "commercially available" cheese starter culture as used herein is a Gouda-type cheese culture typically used for the manufacture of cheese as defined herein, such as strain Lactococcus lactis subsp. cremoris NCDO712 obtainable from the National Collection of food bacteria (NCIBM 700505), Shinfield, Reading, UK (for strain lineage see also Figure 1 in Le Bourgeois et al., J Bacteriol., 182(9): 2481-2491, 2000).

The strains of the culture mix as defined herein might include strains that are capable to metabolize citrate as well as strains that are not capable to metabolize citrate. Preferably, at least one of the starter strains as defined herein, particularly the galactose-excreting strain, is a non-citrate-metabolizing strain.

Starter strains according to the present invention, particularly galactose-excreting strains, can be derived from a suitable ancestor strain, particularly a Lactococcus strain, preferably a strain of L. cremoris or L. lactis. Thus, the present invention furthermore includes a screening method to identify suitable Lactococcus strains capable of excreting galactose to be used for production of cheese, particularly hard or semi-hard cheese, including but not limited to Gouda or Cheddar cheese.

As used herein, the terms "mother strain", "ancestral strain", "ancestor strain", "wild-type strain" or "parent strain" are used interchangeably herein. The bacterial strain to be used as mother strain might be selected from any Lactococcus strain that is common in dairy industry or found in any artisanal sources, so as for instance isolated from plants, and as defined herein, especially a strain used and acceptable in cheese industry, including but not limited to Lactococcus lactis or Lactococcus cremoris. A particularly useful ancestral strain subject to mutations or modifications as described herein is selected from a Lactococcus, preferably Lactococcus lactis and Lactococcus cremoris.

A galactose-excreting strain derived from said mother strain should be understood as a strain obtained by means of e.g., naturally induced mutations with chemical agents or UV light including the screening methods as described herein. It also includes strains found in nature that already have such ability to excrete galactose. Said derivative strains may even arise in a population that is not actively treated to obtain such strains having the properties as described herein, by means of errors during DNA replication (so-called "spontaneous" mutations) and are also included herein. Many methods are known in the art for obtaining such strains and methods for selecting them with desired properties are well known. Preferably, the strain(s) according to the present invention is/are functionally equivalent to the original or mother strain, preferably the mutant shows improved properties, such as e.g., the ability to use glucose and excrete galactose when grown on mill<.

Preferably, said Lactococcus bacterial strain(s) obtainable by a (screening) method as described herein reduces the time needed for development of volatile flavor compounds during cheese ripening, particularly during the early phase of ripening, in comparison to a cheese ripening process using commercially available strains. Such time reduction being in the range of 1 to 2 weeks as compared to development of the volatile flavor compounds during cheese ripening using commercially available cheese starter cultures when used in the manufacturing of a hard or semi-hard cheese such as e.g. Gouda or Cheddar cheese. Particularly said starter culture is preferably comprising or consisting of a mix of Lactococcus strains, such as galactose-excreting Lactococcus strains that might be also a lactose-metabolizing Lactococcus strains, lactose-metabolizing but non-galactose-excreting Lactococcus strains and optionally non-lactose but galactose-metabolizing Lactococcus strains.

Preferably, the starter culture mix comprising Lactococcus bacterial strains according to this invention are produced, supplied or otherwise present in fresh, frozen, dried, or freeze-dried form.

Preferably, the mix of starter cultures comprising Lactococcus bacterial strains according to the present invention and as described herein are dosed, each individually, in an amount of 10⁶ CFU/g to 10⁸ CFU/g of a medium or substrate, such as for example mill<.

In one aspect, this invention provides a composition comprising Lactococcus bacterial strain(s) as described herein to be used in a cheese ripening process, particularly ripening of hard and semi-hard cheese such as e.g., Gouda or Cheddar.

In a further aspect, the present invention relates to a food product comprising the Lactococcus bacterial strain(s) as described herein, such as e.g., a food product selected from cheese, preferably hard or semi-hard cheese, particularly Gouda or Cheddar.

Preferably, the present food product has a flavor profile which is comparable or indistinguishable from the food product, or from the same food product, which does not comprise or which is not manufactured using the present starter culture mix comprising Lactococcus bacterial strains as defined herein, particularly which does not comprise at least one galactose-excreting starter strain. Thus, a food product, such as particularly cheese including Gouda or Cheddar, produced using the starter culture mix as described herein has preferably the same or nearly the same flavor profile as compared to the same food product known in the art but produced with a commercially available starter culture.

Preferably, the present food product as described herein comprising the Lactococcus bacterial strains according to the present invention and as described herein, is a fermented milk product. More preferably a mesophilic or thermophilic fermented mill< product, most preferably a mesophilic milk product. Even more preferably, the fermented milk product is a cheese, such as a hard or semi-hard cheese, including but not limited to Gouda or Cheddar, whereby particularly the sugar content is controlled in such a way that the pH of the cheese is maintained at level that is typical for this cheese.

According to yet another aspect, the present invention relates to a method for manufacturing a food product comprising adding the starter culture mix as defined herein to a milk product, i.e. inoculating a milk product with a mix of starter cultures as defined herein, at the onset of the cheese ripening process.

In one embodiment, the method as described herein comprises one or more fermentation steps. Preferably, the method comprises fermenting a milk substrate or milk as defined herein with a starter culture comprising at least one galactose-excreting strain of the genera selected from Lactococcus. The present step of fermenting a milk substrate can be fermenting under mesophilic or under thermophilic conditions. More preferably, the present method is a method for manufacturing cheese comprising adding at least one Lactococcus bacterial strain according to the present invention, particularly a mix of starter cultures as described herein, during fermentation of mill<, particularly at the early stage of cheese ripening.

According to another aspect, the present invention relates to the use of the inventive Lactococcus bacterial strain(s) as described herein, such as e.g., a mix of Lactococcus bacteria to provide flavor to a cheese product during cheese ripening, particularly during the early phase of cheese ripening, preferably wherein the cheese is selected from a hard or semi-hard cheese including but not limited to Gouda or Cheddar.

The herein described flavoring composition preferably comprises the Lactococcus bacterial strain(s) according to all aspects of the invention and as described herein in a concentration of viable cells, which is, each individually, preferably in the range of 10⁴ to 10¹³ cfu (colony forming units) per gram of the composition including at least about 10⁴ cfu per gram of the composition, such as at least about 10⁵ cfu/g, e.g., at least about 10⁶ cfu/g, such as at least about 10⁷ cfu/g, e.g., at least about 10⁸ cfu/g, such as at least about 10⁹ cfu/g, e.g., at least about 10¹⁰ cfu/g, such as at least about 10¹¹ cfu/g.

Thus, the starter culture to provide and accelerate flavor development according to the present invention is preferably provided in a fresh, frozen, dried, or freeze-dried form, e.g., as a Direct Vat Culture (DVC) or bulkstarter. However, as used herein the composition may also be a liquid that is obtained after suspension of the frozen, dried, or freeze-dried cell concentrates in a liquid medium such as water, milk, or PBS buffer. Where the composition of the invention is a suspension, the concentration of viable cells is in the range of 10⁴ to 10¹³ cfu (colony forming units) per ml of the composition including at least about 10⁴ cfu per gram of the composition, such as at least about 10⁵ cfu/ml, e.g., at least about 10⁶ cfu/ml, such as at least about 10⁷ cfu/ml, e.g., at least about 10⁸ cfu/ml, such as at least about 10⁹ cfu/ml, e.g., at least about 10¹⁰ cfu/ml, such as at least about 10¹¹ cfu/ml. e.g., at least about 10¹² cfu/ml, such as at least about 10¹³ cfu/ml.

In a further preferred embodiment, the herein described food product comprises the Lactococcus bacterial strain(s) according to the present invention and as described herein, each individually, which is in the range of 10⁴ to 10¹² cfu (colony forming units) per gram of the food product including at least about 10⁴ cfu per gram of the food product, such as at least about 10⁵ cfu/g, e.g., at least about 10⁶ cfu/g, such as at least about 10⁷ cfu/g, e.g., at least about 10⁸ cfu/g, such as at least about 10⁹ cfu/g, e.g., at least about 10¹⁰ cfu/g, such as at least about 10¹¹ cfu/g of the food product.

In a further preferred embodiment, the herein described food product optionally comprises strains that produce antimicrobial compounds including nisin or further bioprotective strains such as, e.g., Lactococcus sp., preferably e.g., Lactobacillus casei strain, Lactobacillus paracasei strain, Lactobacillus plantarum strain and/or Lactobacillus rhamnosus strain, and, if present, each individually, in an amount which is in the range of 10⁴ to 10¹² cfu (colony forming units) per gram of the food product including at least about 10⁴ cfu per gram of the food product, such as at least about 10⁵ cfu/g, e.g., at least about 10⁶ cfu/g, such as at least about 10⁷ cfu/g, e.g., at least about 10⁸ cfu/g, such as at least about 10⁹ cfu/g, e.g., at least about 10¹⁰ cfu/g, such as at least about 10¹¹ cfu/g of the food product.

In one embodiment, the food product or the milk product that has been inoculated or supplemented with the mix of starter cultures according to the present invention, further comprises strains that control or simulate the production of nisin into the milk or cheese curd. Nisin-producing strains are known in the art (for reference, see e.g. Gharsallaoui et al., Critical Reviews in Food Science and Nutrition, 56:1262-1274, 2016.

In a preferred embodiment, the present invention relates to the use of a starter culture mix as defined herein comprising Lactococcus bacterial strain(s) as described herein, such as e.g., Lactococcus bacterial strain for providing a flavoring effect in cheese, preferably in ripened cheese, such as e.g. Gouda or Cheddar cheese.

Unless explicitly indicated otherwise, the various embodiments of the invention described herein can be cross-combined and the described preferences for one of the above aspects of the invention also apply to the other aspects of the invention.

### Figures

**Figure 1****:** schematic overview of a starter culture mix comprising 3 Lactococcus strains with different sugar metabolizing properties during fermentation phase and at the onset of the early cheese ripening phase. The size of the black arrow's is the indicative for organic acid production. Strain 1 is a lactose-metabolizing Lactococcus strain. Strain 2 is a lactose-metabolizing, galactose-excreting Lactococcus strain. Strain 3 is a strong flavor-producing and non-lactose, galactose-metabolizing Lactococcus strain.

The following examples are illustrative only and are not intended to limit the scope of the invention in any way. The contents of all references, patent applications, patents, and published patent applications, cited throughout this application are hereby incorporated by reference.

### Examples

### Example 1: General methods and materials

All basic molecular biology and DNA manipulation procedures described herein are generally performed according to Sambrook et al. (eds.), Molecular Cloning: A Laboratory Manual. Cold Spring Harbor Laboratory Press: New York (1989) or Ausubel et al. (eds). Current Protocols in Molecular Biology. Wiley: New York (1998).

Strains and plasmids. The bacterial strains and plasmids used in this study are derived from publicly available stains. Lactococcus lactis DS84445 is a wild-type strain isolated from an artisanal produced dairy product and selected for its high capacity to produce 3-methylbutanal in mill<. Frozen cryovials of the used strains were stored in M17 and 10% (v/v) glycerol and with 10 g/l lactose (LM17) or glucose (GM17). Strains were incubated at 30°C for 18 hours and used to inoculate 1% (v/v) precultures in LM17 or GM17 broth (Oxoid, Hampshire, UK). Chemicals used in this study were obtained from Sigma-Aldrich (Steinheim, Germany) unless indicated otherwise.

Strains used are available from NCIMB (UK), CBS (Westerdijl< Fungal Biodiversity Institute, The Netherlands) or DSM-Firmenich (The Netherlands).

For conjugational transfer of pGdh442, a lactose-negative derivative of strain DS84445 was generated as receptor strain. Donor strain was strain TIL504 (Tanous et al., 2006, Applied and Environmental Microbiology, 72(2),1402-1409) was used. Both donor and receptor strains were preincubated for 18 hours at 30°C in M17 with 10 g/l xylose (XM17) (receptor) or GM17 (donor). In the next step 50 ml precultures were prepared again in XM17 and GM17 and grown for 4.5 hours at 30°C to reach the start of the exponential phase. Conjugational transfer was started by mixing donor and receptor strains in 1:1 volume-ratio in a total volume of 3 ml. The donor-receptor mixture was filtered over a sterile glass vacuum funnel with a 0.45 µm cellulose filter paper (white gridded, 47 mm, Merck Millipore, Massachusetts, USA). Filter papers were placed in the middle of GM17 agar plates (Oxoid, Hampshire, UK) and incubated for 20 hours at 30°C. The filter papers were picked up from the GM17 agar plates and placed in 5 ml Peptone Physiological Salt (PPS) solution (Tritium Microbiologie, Eindhoven, the Netherlands). Selective M17 medium was prepared by first growing the donor strain on liquid M17 medium without sugar for 18 hours at 30°C, whereby natural present energy sources present in M17 were being depleted. After incubation the donor strain was removed by filtration. Selective compounds: 0.2 mM cadmium chloride, 2% (wt/wt) xylose and 0.4% (wt/v) of the pH indicator bromocresol purple (BCP) and agar were added to the filtrated M17 medium. The selective M17 medium was sterilized by heating (121°C for 15 minutes), after which it was cooled down to 46°C and poured onto agar plates. Cadmium resistance is encoded on the plasmid pGdh442 and was used to select for cells containing the plasmid. Recipient strain DS84445-lac^{neg} can utilize xylose, while the donor strain cannot, and this property was used to select for DS84445-lac^{neg}. The 0.4% (wt/v) bromocresol purple (BCP) colour the colonies yellow, which are expected to be DS84445-lac^{neg}-pGdh442 cells. The PPS solution obtained from the conjugational transfer test was plated out in different dilutions on the selective M17 agar plates and incubated at 30°C for 2 to 4 days until yellow colonies were visible.

Selected yellow colonies were purified three times by streaking on selective agar plates and stored in GM17 with glycerol at -40°C until further analysis.

Analysis of the new strains were confirmed with Geneious software (Biomatters, Auckland, New Zealand). Comparative genomics analysis showed that strains DS84445-lac^{neg} and DS84445-lac^{neg}-pGdh442 have the same genetic backbone as strain DS84445, and that the plasmid encoded gdh gene is completely transferred from donor strain TIL504 to recipient strain DS84445-lac^{neg}-pGdh442.

Chemical analysis. The α-ketoisocaproic acid and 3-methylbutanal levels were determined by Headspace-Solid Phase Micro Extraction Gas Chromatography-Mass Spectrometry using a Trace 1300 Gas Chromatograph with a TriPlus RSH autosampler, and an ISQ QD mass spectrometer (ThermoFisher Scientific, Massachusetts, USA). The air-tide sealed vials were kept at -1°C during the total run. Samples were incubated at 60°C for 20 minutes, followed by an extraction at 60°C for 20 minutes with a divinylbenzene/carboxen/polymethylsiloxane fibre (DVB/Car/PDMS) (Supelco, Pennsylvania, USA). The volatiles were desorbed from the fiber to the injector for 2 minutes on a Stabilwax-DA-Crossband-Carbowax-polyethylene-glycol column (30 m length, 0.25 mm ID, 0.5 µm df). The gas chromatograph was used in split mode at a ratio of 1:5 at 250°C. The oven temperature was initially set at 35°C for 2 minutes, gradually increased with 10°C per minute and was kept at 240°C for 5 minutes. The total run time was 27.5 minutes. Helium was used as carrier gas with a constant flow of 1.2 ml per minute. Mass spectral data were collected over a range of m/z 33-250 in full scan mode with 3.0 scans per second. The obtained data were analysed using Chromeleon 7.2. Peak integration was done using ICIS algorithm and NIST main library was used to match the mass spectral profiles with the profiles of NIST. Peak areas were calculated using the MS quantification peak area (highest m/z peak per compound), and subsequently corrected with blanks containing the same medium and incubated under the same conditions. Corrections were less than 3% of total peak areas of samples.

For analysis of alanine, amino acids were extracted from 400 mg sample matrix with 25 ml 0.1 M HCl. After centrifugation for 5 minutes at 20,000g clear supernatants were obtained. 100 µl of the supernatants were mixed with 100 µl of an internal standard mixture, containing 13C, 15N isotopically labelled alanine, in a concentration of approximately 1 mg/ml. The internal standard was used to exclude errors caused by ion suppression, derivatization, evaporation, and injection effects. Prior to analysis, samples were derivatized according to the AccQ·Tag method developed by Waters Corporation (Milford, MA, USA) and according to the manufacturer's protocol. 10 µl of either a standard amino acid mix solution, or a sample extract were mixed with 70 µl of AccQ·Tag Ultra borate buffer, and 20 µl of AccQ·Tag reagent previously dissolved in 1.0 ml of AccQ·Tag Ultra reagent diluent were added. The reaction was allowed to proceed for 10 minutes at 55°C. Liquid chromatographic analysis was performed on a Waters Acquity I-Class UPLC system, equipped with a binary solvent manager, an autosampler, a column heater, a PDA detector, and interfaced to a Xevo TQS-Micro Mass spectrometer. The separation column was a Waters BEH C18 column (2.1 mm i.d. × 100 mm, 1.7 µm particles). The column heater was set at 50°C and the mobile phase flow rate was maintained at 0.7 ml/min. Eluent A was 10% (v/v) AccQ·Tag Ultra concentrate solvent A in purified water, and eluent B was 100% AccQ·Tag Ultra solvent B. The non-linear separation gradient was 0-0.54 min (99.9% A), 5.74 min (90.0% A), 7.74 min (78.8% A), 8.04-8.64 min (40.4% A), 8.73-10 min (99.9% A). 0.5 µl of sample was injected for analysis. Mass spectrometry (MS) detection was carried out using a Waters TQD tandem quadrupole detector interfaced with an Acquity UPLC system via an ESI probe. The mass spectrometer was automatically tuned and calibrated using the Waters IntelliStart software. The ESI source was operated in the positive ionization mode at 150°C, with a desolvation temperature of 600°C, a 1,000 l/h desolvation gas flow rate, and a capillary voltage set at 1.5 kV. The cone voltage was set to 30 V. MS methods, with multiple reaction monitoring (MRM), were designed with five functions covering the 10 min LC separation time window. The dwell time was set to either 0.01 or 0.02 s. Data analysis and quantitation was performed using the Waters MassLynx and QuanLynx software. The lowest detection limit is 2.6 µg/g.

Enzyme analysis. Samples from incubation experiments were taken and cells were harvested by centrifugation at 10,670g for 10 minutes at 5°C. Concentrated cells were washed three times with 50 mM sodium phosphate buffer (pH 7.0) and re-suspended in 3 ml of the same buffer. Then, 1 ml of the washed biomass was added to a 2 ml beat tube that contained 1-1.5 g zirconia beads. Cell Free Extract (CFE) was prepared by beating the tubes at 4 m/s in a FastPrep^{®}-24 (MP Biomedicals, Solon, USA) for 30 seconds, followed directly by cooling on melting ice for 5 minutes. The beating and cooling steps were repeated four times. The cell debris and supernatant were separated by centrifugation at 10,670g for 10 minutes at 5°C. The supernatants were collected as CFE and kept on melting ice until enzyme activities and protein concentrations were measured. Protein concentrations of CFE were measured using Pierce BCA Protein Assay Kit (Thermofisher Scientific, Waltham, Massachusetts, USA).

Leucine aminotransferase activity measurement was previously described by Brandsma et al. (idairyj 18, 1103-1108, 2008). In short, the reaction mixture contained 25 mM phosphate buffer (pH 7.5), 0.05 mM pyridoxal-5'-phosphate, 50 mM ammonium sulphate, 0.35 mM NADH, 10 mM α-ketoglutarate, 10 mM L-leucine as a substrate, and 100 µl CFE in a final volume of 1 ml. Leucine aminotransferase activities were determined by the maximum reduction rate of NADH measured by OD340nm for 15 minutes at 30°C. The protein concentrations of CFE expressed in µg/ml were used to calculate the specific enzyme activity (nmol/min/mg).

The GDH activity was measured with the GDH kit (KA0879, Abnova, Taipei, Taiwan). The protein concentrations of CFE expressed in µg/ml were used to calculate the specific enzyme activity (nmol/min/mg).

For measurement of α-ketoisocaproic acid decarboxylase activity (Smit et al., Appl Environ. Microbiol., Vol.71, No.1, 303-311, 2005) cell free extract of strain DS84445 grown for 18 hours in GM17 at 30°C was prepared as described above. In short, cell free extract was incubated in 3 ml reaction mixture containing 50 mM Mcllvaine buffer with pH of 6.3, 100 µM thiamin pyrophosphate, 500 µM MgCl2 and 20 mM α-ketoisocaproic acid for 3 hours at 30°C in a sealed 10 ml vials. The reaction was stopped by lowering the pH to a value between 2 and 3 with 6 M HCl. The 3-methylbutanal concentration was quantified by static headspace GC by using a calibration curve in reaction mixture. The protein concentrations of CFE expressed in µg/ml were used to calculate the specific enzyme activity in nmol 3-methylbutanal per min per mg.

Incubation experiments. Inoculum of DS84445-lac^{neg} and DS84445-lac^{neg}-pGdh442 strains for the incubation experiments was prepared from precultures. Thereto, cells were harvested from full grown GM17 precultures by centrifugation at 10,670g for 5 minutes at 4°C and washed twice with 50 mM sodium phosphate buffer (pH 6.5 +/- 0.1). Incubation media were prepared based on chemically defined medium (CDM) described by Otto et al. (FEMS Microbiology Letters 16, 69-74, 1983), whereby the following adaptions were made. Depending on the experiment, CDM was made with either potassium phosphate buffer (39 mM, pH 6.5 +/- 0.1) or with citrate-phosphate buffer containing 50 mM citric acid and 100 mM disodium hydrogen phosphate (pH 5.2 +/- 0.1). The CDM media with initial pH of 6.5 and 5.2 were inoculated with concentrated cell suspension obtained from the precultures to a final cell count of 2 × 107 or 2 × 108 per ml, respectively (determined by flow cytometry). Cell counts were measured as described below from which inoculation rate was calculated. Directly after inoculation, the 15 ml CDM was divided in 2 portions. A portion of 13 ml was transferred to 15 ml conical tube (Greiner, Pleidelsheim, Germany) and the other portion of 2 ml was transferred to 10 ml air-tide sealed vials (Crimp-nel< N20, Macherey-Nagel, Germany), and both were incubated at 30°C. For each time point samples were prepared in triplicate. The conical tubes were taken directly after inoculation and after different incubation times (24, 48 and 72h), and used for cell counts determination via selective plating or live/dead counting. Vials were stored at - 40°C until further analysis. For each experiment non-inoculated blanks were taken along and incubated under the same conditions. Presented data represent average of biological triplicates. All incubations were performed at 30°C.

Microbial analysis. For evaluation of viable cell counting, appropriate dilutions of samples taken from CDM incubations were made in PPS and streaked-out on GM17 agar plates and incubated in an aerobic jar at 30°C for 5 days.

For live/dead cell counting, the number of cells with non-compromised cell membrane (live) and cells with a compromised cell membrane (damaged or dead) was determined using LIVE/DEAD Baclight Bacterial Viability kit (ThermoFisher Scientific, Massachusetts, USA) and analysed using a CytoFLEX Flow Cytometer (Beckman Coulter, California, USA). The CDM samples were diluted 100 or 1,000 times with PPS, and 199 µl of each diluted sample was added into a 96-well F-bottom microtiter plate (Greiner, Fricl<enhausen, Germany). A staining mixture of 4.5 µl SYTO 9, 4.5 µl propidium iodide (PI) and 141 µl demi waters was prepared. Cells were stained by adding 1 µl staining mixture to each 96-well F-bottom microtiter plate, which was stored in the dark for 15 minutes at room temperature. The green fluorescent SYTO 9 labelled the nuclei of live cells, while the red-fluorescent PI labelled dead cells or cells with a compromised cell membrane. Number of live, damaged, and dead cells were counted with the flow cytometer at 488 nm to a maximum of 10,000 events. During all measurements the number of damaged cells was less than 1% of the number of live cells.

### Example 2: Effect of pyruvate supplementation in vitro experiments on volatile flavor production

To test the effect of pyruvate supplementation on the transamination of leucine host cells with and without the presence of glutamate dehydrogenase (GDH) activity were incubated in CDM at pH 5.2 with and without addition of pyruvate. Strains were constructed as described above (see Ex. 1).

As shown in Table 1, strains incubated in medium that was not supplemented with pyruvate only produce low amounts of 3-methylbutanal, irrespectively of the presence of GDH activity. In the pyruvate supplemented medium, the level of 3-methylbutanal was much higher and nearly the same for the GDH-positive strain and strain lacking GDH-activity after incubation for 72 hours.

**Table 1. Levels of 3-metylbutanal produced by DS84445-lac^{neg} ("GDH-") and DS84445-lac^{neg}-pGdh442 ("GDH+") in CDM supplemented with ("+") and without ("-") 10 mM pyruvate at pH of 5.2 and incubated at 30°C. Measurements were taken after 0, 24, 48 or 72 hours incubation time. For more details, see text.**

| | 0 | | 24 | | 48 | | 72 | |
|---|---|---|---|---|---|---|---|---|
| | + | - | + | - | + | - | + | - |
| GDH- | -3 | -3 | 101 | 9 | 117 | 18 | 149 | 32 |
| GDH+ | -2 | -3 | 113 | 12 | 142 | 17 | 140 | 34 |

These observations could not be explained by differences in cell counts because live cell count numbers of both strains supplemented with and without pyruvate remained stable at 8.57 log₁₀ counts per ml over the course of 72 hours incubation. Thus, it was shown that pyruvate stimulated the 3-methylbutanal production by serving as an ammonia acceptor. Pyruvate can stimulate transamination directly by accepting ammonia from transaminated amino acids, or indirectly by first generating another ammonia acceptor for instance α-ketoglutarate. In both cases, pyruvate will accept ammonia and convert into alanine (see Table 2). To test this, strain DS84445-lac^{neg} was incubated under the same sugar deprived and pyruvate supplemented conditions as before (30°C), but now alanine was omitted from the CDM medium. Alanine concentrations of cells incubated without pyruvate were below detection limit (2.7 µg/g). Average live cell count numbers after 0 and 72 hours of incubation supplemented with and without pyruvate were 8.32 log₁₀ and 8.31 log₁₀ counts per ml, respectively (not shown).

Production of alanine demonstrates that pyruvate serves as an ammonia acceptor and stimulates transamination reactions. The alanine production steadily increased throughout the 72 hours of incubation, while the 3-methylbutanal production stabilized after 24 hours of incubation (see Table 2).

**Table 2: alanine production in strain DS84445-lac^{neg}, i.e. strain lacking GDH-activity with and without addition of pyruvate. "Nd" means not detected. For more explanation, see above.**

| | 0 | | 24 | | 48 | | 72 | |
|---|---|---|---|---|---|---|---|---|
| | + | - | + | - | + | - | + | - |
| GDH- | 0 | 0 | 3.5 | nd | 5.0 | nd | 6.0 | nd |

### Example 4: Effect on sugar metabolization on volatile flavor production (in-vitro)

As shown before, strain DS84445-lac^{neg} and DS84445-lac^{neg}-pGdh442 produced comparable relative amounts of α-ketoisocaproic acid and 3-methylbutanal which indicates that GDH activity did not stimulate the transamination of leucine (see Table 1).

Next, an experiment was conducted to test the effect on glucose on transamination and flavor development. Thus, strains were grown in CDM with 1% (wt/v) glucose and incubated at 30°C as described in Ex. 1. The results are shown in Table 3. The strain medium acidified from pH 6.5 (typical for cheese milk).

**Table 3A. Levels of α-ketoisocaproic acid produced by strains DS84445-lac^{neg} and DS84445-lac^{neg}-pGdh442. Measurements were taken after 0, 24, 48 or 72 hours incubation time. For more details, see text.**

| | 0 | 24 | 48 | 72 |
|---|---|---|---|---|
| GDH- | 0 | 0 | 21 | 79 |
| GDH+ | 0 | 0.1 | 23 | 82 |

**Table 3B. Levels of 3-methylbutanal produced by strains DS84445-lac^{neg} and DS84445-lac^{neg}-pGdh442. Measurements were taken after 0, 24, 48 or 72 hours incubation time. For more details, see text.**

| | 0 | 24 | 48 | 72 |
|---|---|---|---|---|
| GDH- | 0.5 | 31 | 298 | 352 |
| GDH+ | 3 | 35 | 288 | 349 |

Accumulation of α-ketoisocaproic acid indicated that decarboxylation of α-I<etoisocaproic acid was rate limiting for the production of 3-methylbutanal. Apparently, transamination of leucine was not limited by the availability of an ammonia acceptor in sugar metabolizing cells. Glycolysis produces relatively large amounts of pyruvate which is predominantly converted into lactic acid. However, a limited amount of pyruvate might be used for other cellular reactions for instance serving as ammonia acceptor for transamination reactions. This could explain that α-ketoglutarate was not limiting and GDH activity did not stimulate production of α-ketoisocaproic acid and 3-methylbutanal.

The declining 3-methylbutanal production after the first 24 hours of incubation (see Table 3) might also reflect a reduction of the viable and or live cell count numbers. Thereto, live cells count numbers were determined with live/dead staining method, and viable cell counts were determined with agar plate counting. As before, the average live cell counts of all variants in the incubation experiments with sugar deprived conditions remained stable at 8.57 log₁₀, whereby the number of dead cells was less than 5%. However, viable cells count numbers declined with more than 2 orders of magnitude to counts below 6.39 CFU/ml. 6 × 10⁴ CFU/ml. Thus, cells predominantly maintained the cell membrane integrity but the capacity to form colonies on agar plates strongly reduced during the 72 hours of incubation under sugar deprived conditions (not shown).

Tests were performed to check whether intracellular enzymes involved in the transamination of leucine remained active under these typical cheese ripening conditions. Cells were incubated in CDM with 0.5% (wt/v) glucose at 30°C that enabled acidification until sugar is exhausted and a pH of 5.2 is reached (time point 0h), which then remained stable during the 72 hours of incubation at an average value of 5.29. Viable cell count numbers at incubation time point 0h were comparable for both DS84445-lac^{neg} and DS84445-lac^{neg}-pGdh442 strains at about 2 × 10⁹ CFU/ml. During incubation the viable cell count numbers declined (not shown) as shown in Table 4.

The specific activities of both leucine transaminase and glutamate dehydrogenase were also measured: highest leucine transaminase activities of both strains DS84445-lac^{neg} and DS84445-lac^{neg}-pGdh442 were reached after 24 hours of incubation and remained stable during the following 48 hours. Cells of strain DS84445-lac^{neg} were supplemented with pyruvate and had comparable leucine transaminase activities as the reference cells (not shown). Thus, pyruvate does not impact the stability of intracellular leucine transaminase activities of cells. GDH activity follows a different pattern with an increase during the first 24 hours to 0.18 followed by a decline during the following 48 hours to 0.02 nmol/min/mg. Compared to leucine transaminase activity, the stability of GDH activity of sugar deprived cells is low.

### Example 5: Generation of new galactose-excreting starter strains for cheese ripening

Based on the results above, i.e. the relatively stable leucine transaminase activity compared to the glutamate dehydrogenase activity in sugar deprived cells, new strains can be generated enabling an increased sugar content in cheese at the onset of the ripening phase to increase the availability of pyruvate for the starter culture to produce flavors. To avoid stimulation of organic acid production which lowers the pH and negatively affects cheese flavor, texture, and appearance, the new starter culture comprises 3 strains selected from Lactococcus, such as strains of L. lactis and/or L. cremoris:
The first fast lactose-metabolizing Lactococcus strain is responsible for the fast acidification of the cheese mill<. This strain is fastly permeabilizing and thus can release intracellular enzymes into the cheese matrix, i.e. enzymes supporting casein breakdown.
The second strain is a glucose-metabolizing Lactococcus strain, i.e., a strain that only metabolises the glucose moiety of the lactose and excretes galactose which increases the sugar content in cheese. By using a galactose metabolizing and non-galactose metabolizing strain, the galactose content in cheese can be controlled.

The additional galactose content is metabolised by a third galactose-metabolizing strain that is capable of only metabolising galactose and predominately responsible for increased production of volatile flavors (see Figure 1). This strain remains metabolically active during the cheese ripening phase and produces additionally pyruvate that serves as ammonia acceptor to support transamination of amino acids. Preferred is a strain that provides enzymes capable of breakdown of methionine, branched chain or aromatic amino acids, as well as α-ketoacid decarboxylase activity. With this, the flavoring process can be controlled due to the relatively slow metabolization of galactose by Lactococcus (Thomas et al., J Bacteriol 144: 672-682, 1980).

Galactose-excreting strains of Lactococcus can be generated via natural or non-naturally mutation technologies as known in the art. The starter culture mix can be used in preparation of hard or semi-hard cheese, specifically for production of Gouda or Cheddar (see Figure 1).

## Claims

1. A mix of starter cultures comprising strains of Lactococcus, wherein at least one of the strains is a galactose-excreting Lactococcus strain, preferably a strain selected from L. cremoris or L. lactis, said starter cultures being used in a cheese ripening process.

2. The mix according to claim 1 which is added to a milk product at the onset of cheese ripening phase.

3. The mix according to claim 1 or 2, wherein the cheese is a hard or semi-hard cheese, preferably Gouda or Cheddar.

4. The mix according to any one of claims 1 to 3, said mix comprising one or more lactose-metabolizing Lactococcus strain and optionally a non-lactose, galactose-metabolizing Lactococcus strain.

5. The mix according to claim 4, wherein the lactose-metabolizing Lactococcus strain is involved in acidification of the milk product.

6. The mix according to any one of claims 1 to 3, said mix furthermore comprising lactic acid bacteria (LAB) strains, preferably LAB strains selected from Streptococcus Bifidobacterium, or Lactobacillus, more preferably strains selected from the group consisting of Lactobacillus delbruel<ii subsp. bulgaricus, Streptococcus thermophilus, Bifidobacterium animalis, Lactococcus lactis, Lactococcus cremoris, Lactobacillus casei, Lactobacillus plantarum, Lactobacillus paracasei, Lactobacillus rhamnosus, Lactobacillus helveticus, Lactobacillus acidophilus, Bifidobacterium breve, Lactococuss lactis biovar. diacetylactis and mixtures thereof.

7. The mix according to any one of claims 1 to 6 used for the inoculation of a milk product in the manufacturing of cheese, particularly manufacturing of hard or semi-hard cheese.

8. Use of the mix according to any one of claims 1 to 7, in a cheese ripening process, particularly ripening of hard or semi-hard cheese.

9. Use of the mix according to any one of claims 1 to 7 for reducing the time of cheese ripening, wherein the cheese is a hard or semi-hard cheese and wherein the time for cheese ripening is reduced by at least about 1 to 2 weeks.

10. Use according to claim 8 or 9, wherein the reduction of cheese ripening time does not change the flavor profile typical for the cheese as compared to the use of commercially available starter cultures.

11. A process for production of cheese, preferably hard or semi-hard cheese, comprising inoculating a milk product with a mix of starter cultures according to any one of claims 1 to 7.

12. The process according to claim 11, comprising development of volatile cheese flavors during the cheese ripening phase, preferably during the early cheese ripening phase, more preferably wherein the presence of said mix of starter cultures does not change the flavor profile or the pH during the cheese production process.

13. The process according to claim 11 or 12, wherein the time of cheese ripening, particularly the time for developing the volatile cheese flavors, is reduced by at least 1 week as compared to a process using a commercially available starter culture.

14. The process according to any one of claims 11 to 13 comprising one or more washing steps, wherein the amount of washing water is reduced by at least 10% compared to a process using a commercial starter culture, preferably wherein the process is used for production of any semi-hard cheese type, such as Gouda.
